# EUROPÄISCHE PATENTSCHRIFT

(11) **EP 2 149 520 B1**
(45) Veröffentlichungstag und Bekanntmachung des Hinweises auf die Patenterteilung: **13.04.2011**
(21) Anmeldenummer: 09162938.6
(22) Anmeldetag: 17.06.2009
(51) Int. Cl.: B65G 59/04, B65H 3/08

(54) **Verfahren und Vorrichtung zum Abheben eines Stirndeckels von einem Stirndeckelstapel**
Device and method for lifting a front cover from a stack of front covers
Procédé et dispositif de décollage d'un couvercle frontal d'une pile de couvercles frontaux

(30) Priorität: 29.07.2008 DE 102008040826
(43) Veröffentlichungstag der Anmeldung: 03.02.2010
(73) Patentinhaber: Voith Patent GmbH, 89522 Heidenheim (DE)
(72) Erfinder: Holtwick, Michael, 47665 Sonsbeck (DE); Nelles, Josef, 52224 Stolberg (DE)

(56) Entgegenhaltungen:
- DE-A1- 2 256 793
- DE-A1- 2 603 432

## Beschreibung

Die Erfindung betrifft ein Verfahren zum Abheben eines Stirndeckels von einem Stirndeckelstapel mittels eines an einem Haltearm befestigten und mit Saugnäpfen versehenen Greifers, bei welchem Verfahren der Greifer auf den obersten Stirndeckel des Stirndeckelstapels aufgesetzt wird und die Saugnäpfe mit Unterdruck beaufschlagt werden, wobei wenigstens einer der Saugnäpfe unabhängig von den restlichen Saugnäpfen angehoben wird.

Ferner betrifft die Erfindung eine Vorrichtung in einer Rollenverpackungsvorrichtung zum Abheben eines Stirndeckels von einem Stirndeckelstapel mittels eines mit mehreren Saugnäpfen ausgestatteten, an einem Haltearm befestigten Greifers, wobei wenigstens einer der Saugnäpfe unabhängig von den restlichen Saugnäpfen abhebbar ist

Die Erfindung wird nachstehend im Zusammenhang mit dem Verpacken einer Papierrolle, d.h. einer Rolle aus einer aufgewickelten Papier- oder Kartonbahn, beschrieben. Sie ist aber bei auch vergleichbaren Rollen, die verpackt werden sollen, anwendbar.

In einem der letzten Herstellungsschritte werden Papier- und Kartonbahnen auf die gewünschte Breite geschnitten und anschließend zu Rollen aufgewickelt. Diese Rollen haben üblicherweise einen Durchmesser im Bereich zwischen 0,5 und 3 m und eine Länge im Bereich von 0, 3 bis 5 m. Das Gewicht derartiger Rollen bewegt sich zwischen einigen hundert Kilogramm und einigen Tonnen. Diese Rollen müssen verpackt werden, um während eines Transportes oder während einer Lagerung vor Beschädigungen durch äußere Einflüsse geschützt zu sein.

In einem weit verbreiteten Verpackungsverfahren wird daher zunächst jeweils ein sogenannter Innenstirndeckel an die Stirnseiten der Rolle angelegt. Dieser Innendeckel muß passend zum Durchmesser der Rolle gewählt werden, d.h. sein Durchmesser muß etwas kleiner sein als der Durchmesser der Rolle. Danach wird die Umfangsfläche der Rolle mit einer Verpackungsbahn umgeben, beispielsweise mit Packpapier, und zwar mit einem axialen Überstand im Bereich von 250 bis 350 mm je Stirnseite. Dieser axiale Überstand wird auf die jeweilige Stirnseiten bzw. die dort befindlichen Innenstirndeckel umgebördelt. Danach wird auf jede Stirnseite noch ein sogenannter Außenstirndeckel aufgeklebt. Auch der Außenstirndeckel muß passend zum Durchmesser der Rolle gewählt werden.

Diese regelmäßig aus Papier- oder Pappe bestehenden und biegsamen Innen- bzw. Außenstirndeckel, für die im folgenden einfachheitshalber der Begriff "Stirndeckel" benutzt wird, sind stapelförmig aufeinander gelagert und werden von einem Roboter mit Greifvorrichtung jeweils einzeln von den jeweiligen in der Nähe der Verpackungsvorrichtung plazierten Stapeln abgenommen und an die Stirnseiten der Rolle angelegt. Dabei ergibt sich das Problem, daß oft nicht nur der jeweils oberste Stirndeckel abgehoben wird, sondern auch der darunterliegende, der dann neben dem Stapel abfällt und manuell entsorgt werden muß, was zu teilweise erheblichen Produktionsunterbrechungen führt, weil die Anlage für derartige Entsorgungsfälle vorübergehend stillgestellt werden muß, da der gesamte Roboterbereich während des laufenden Betriebs nicht vom Personal betreten werden darf.

Zur Lösung dieses Problems ist in DE 197 17 947 A1 eine Anlage vorgesehen worden, die wenigstens einen sich zumindest teilweise oberhalb des Stirndeckelstapels erstreckenden Halter aufweist, der sich auf dem Außenumfang des Stapels abstützt, wobei der oder die Halter beim Abheben des obersten Stirndeckels den darunter liegenden Deckel an seinem Platz halten. Jedem der Stirndeckelstapel muß mindestens ein solcher Halter zugeordnet sein, was dazu führt, daß jeweils soviel Halter vorzuhalten sind, als es Stapel gibt, und daß die Stapel stets eigens mit entsprechenden Haltern bestückt werden müssen.

Aus der DE-OS 2256793 sind ein Verfahren und eine Vorrichtung zum Ansaugen und Abheben der obersten Platte von einem Plattenstapel bekannt. Dies geschieht, indem zunächst ein Ende der Platte angesaugt und abgehoben wird, während die Platte in dem nichtangesaugten Bereich nach unten gedrückt wird. Durch die Biegung wird die Platte von den darunter liegenden Platten abgelöst und kann insgesamt angehoben werden.

Der Erfindung liegt die Aufgabe zugrunde, eine Vorrichtung der eingangs erwähnten Arten so weiterzubilden, daß die vorgenannten Probleme vermieden werden.

Diese Aufgabe wird erfindungsgemäß bei dem Verfahren der eingangs genannten Art dadurch gelöst, daß zusätzlich eine Schwenk-/Kippbewegung des Greifers vorgenommen wird, die den Abhebevorgang unterstützt, wobei die Schwenk-/Kippbewegung des Greifers bereits eingeleitet wird, wenn der Stirndeckel noch nicht vollständig von seinem Untergrund, insbesondere dem Stirndeckelstapel, abgehoben worden ist.

Vorteilhafte Weiterbildungen ergeben sich aus den Unteransprüchen.

Beim Einsatz der erfindungsgemäßen Abhebevorrichtung wird der Greifer zunächst in bekannter Weise auf den Deckelstapel aufgesetzt. Sodann werden die Saugnäpfe mit Unterdruck beaufschlagt. Anschließend wird wenigstens einer der Saugnäpfe unabhängig von den restlichen Saugnäpfen angehoben. Dadurch wird ein entsprechender Teilabschnitt des Stirndeckels vom Stirndeckelstapel abgehoben, während die restlichen Saugnäpfe den Stirndeckel weiter gegen den Stirndeckelstapel drücken. Es entsteht also ein "Zwickel" zwischen dem Stirndeckel und dem Stirndeckelstapel. Nun wird der Greifer als solcher gekippt/verschwenkt. Das führt dazu, dass der eben erwähnte Zwickel wächst. Versuche haben gezeigt, daß dieses "fortschreitende" Vergrößern des "Zwickels" oftmals schon ausreicht, um zu verhindern, dass der Stirndeckel bei seinem vollständigen Abheben den unmittelbar auf ihn folgenden Stirndeckel "mitnimmt". Der so "sauber" vereinzelte Stirndeckel wird alsdann auf herkömmliche Art an die Stirnseite der zu verpackenden Rolle angelegt. Es versteht sich, dass der Stirndeckel zu diesem Zweck wieder in eine plane Stellung gebracht wird, bevor er auf die Stirnseite der Rolle aufgesetzt wird. Natürlich kann man den "Zwickel" auch dadurch vergrößern, daß man zusätzlich zu dem mindestens einen angehobenen Saugnapf weitere Saugnäpfe nacheinander abhebt und die Schwenk/Kippbewegung des Greifes erst später vornimmt. Natürlich kann eine Steuer-/Regeleinrichtung vorgesehen werden, die vorgibt, in welchen zeitlichen Abständen die Saugnäpfe angehoben werden und wann die Schwenk/Kippbewegung des Greifers eingeleitet werden soll. Das Gleiche gilt für den Unterdruck, mit dem die Saugnäpfe beaufschlagt werden.

Auch er kann mittels einer nicht dargestellten Steuer-/Regeleinrichtung den jeweiligen Betriebsbedingungen, z.B. dem je unterschiedlichen Flächengewicht des Stirndeckels, seiner Porosität etc., angepaßt werden.

Die erfindungsgemäße Vorrichtung hat Vorteil, daß sie ohne einen jeweils separat auf den Stirndeckelstapel aufzulegenden Halter, wie ihn DE 197 17 947 A1 zeigt, auskommt und in jedem Fall sicherstellt, daß jeweils nur ein einziger Stirndeckel abgehoben wird.

Die Erfindung wird im folgenden anhand dreier schematisierter Zeichnungen näher erläutert. Sie zeigen jeweils einen Stirndeckelstapel in Verbindung mit der erfindungsgemäßen Abhebevorrichtung. Von den dargestellten Ausführungsformen kann jedoch in vielfacher Hinsicht abgewichen werden, ohne daß der Grundgedanken der Erfindung verlassen wird.

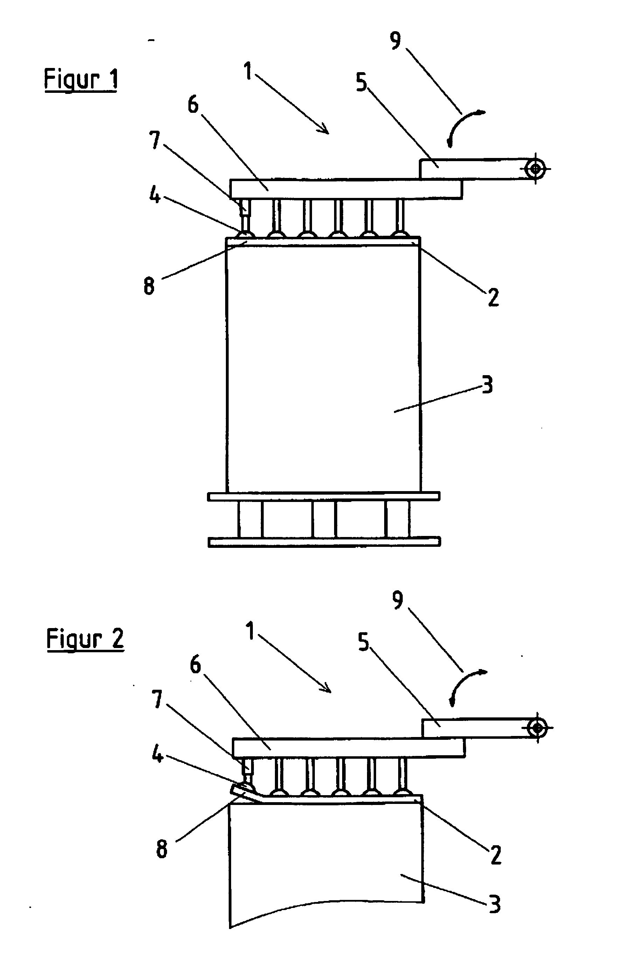

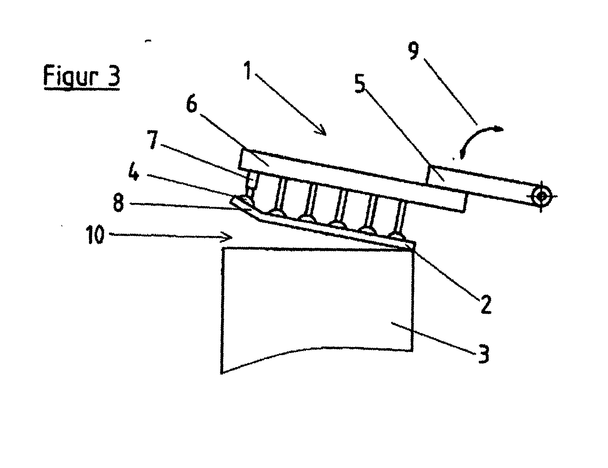

Die Fig. 1 bis 3 stellen die erfindungsgemäße Vorrichtung zum Abheben eines Stirndeckels von einem Stirndeckelstapel in aufeinanderfolgenden Betriebszuständen dar. Gleiche Teile sind mit gleichen Bezugsziffern versehen.
Fig. 1 zeigt eine Vorrichtung 1 zum Abheben jeweils eines Stirndeckels 2 von einem Stirndeckelstapel 3. Die Vorrichtung 1 besteht aus einem an einem Haltearm 5 schwenkbar (vgl. Pfeil 9) befestigten Greifer 6, der mit Saugnäpfen 4 bestückt ist. Die Saugnäpfe sind in im wesentlichen gleichen Abständen so angeordnet, daß sie den abzuhebenden Stirndeckel 2 in seiner Randzone auf einer innen liegende Kreisbahn berühren. Zwischen diesen randständigen Saugnäpfen 4 können zusätzliche weitere innen liegende Saugnäpfe vorgesehen sein. Die Versorgungsleitungen für Saugnäpfe sind nicht dargestellt. Wenigstens einer der Saugnäpfe ist mit einem Hubelement 7 ausgerüstet, das vorzugsweise als Vakuum-Hubzylinder ausgebildet ist. - als Beispiel für einen solchen Hubzylinder kann auf DE 103 24 835 A1 verwiesen werden. Nicht dargestellt ist eine Steuer-/Regeleinheit, die dafür sorgt, daß das Abheben des mindestens einen Saugnapfs 4 und das Kippen/Abschwenken des Greifers 6 so koordiniert werden, daß ein "sauberes" Abheben des Stirndeckels 2 auch dann sichergestellt ist, wenn die Stirndeckel 2 je verschiedenen Eigenschaften - Flächengewicht, Porosität usw. - aufweisen.
Fig. 2 zeigt die erfindungsgemäße Vorrichtung in einem zweiten Betriebszustand, bei dem ein Saugnapf (4) als erster und unabhängig von den restliche Saugnäpfen angehoben worden ist, so dass ein Teilsegment (Pfeil 10) des Stirndeckels (2) vom Stirndeckelstapel (3) abgehoben ist.
Fig. 3 zeigt einen dritten Betriebszustand, bei dem der Stirndeckel (2) nahezu vollständig von Stirndeckelstapel (3) abgehoben ist.

### Bezugszeichenliste

- 1: Stirndeckel-Abhebevorrichtung
- 2: Stirndeckel
- 3: Stirndeckelstapel
- 4: Saugnapf
- 5.: Haltearm
- 6: Greifer
- 7: Hubelement
- 8: Randzone, Teilabschnitt des Stirndeckels
- 9: Pfeil

## Patentansprüche

1. Verfahren zum Abheben eines Stirndeckels (2) von einem Stirndeckelstapel (3) mittels eines an einem Haltearm (5) befestigten und mit Saugnäpfen (4) versehenen Greifers (6), bei welchem Verfahren der Greifer (6) auf den obersten Stirndeckel (2) des Stirndeckelstapels (3) aufgesetzt und die Saugnäpfe (4) mit Unterdruck beaufschlagt werden, wobei wenigstens einer der Saugnäpfe (4) unabhängig von den restlichen Saugnäpfen angehoben wird, **dadurch gekennzeichnet, daß** zusätzlich eine Schwenk-/Kippbewegung (Pfeil 9) des Greifers (6) vorgenommen wird, die den Abhebevorgang unterstützt, wobei die Schwenk-/Kippbewegung (Pfeil 9) des Greifers (6) bereits eingeleitet wird, wenn der Stirndeckel (2) noch nicht vollständig von seinem Untergrund, insbesondere dem Stirndeckelstapel (3), abgehoben worden ist..

2. Verfahren nach Anspruch 1, **dadurch gekennzeichnet, daß** wenigstens einer der Saugnäpfe (4) als erster angehoben wird, wodurch ein Teilabschnitt (8) des Stirndeckels (2) vom Stirndeckelstapel (3) abgehoben wird.

3. Verfahren Anspruch 1 und 2, **dadurch gekennzeichnet, daß** wenigstens ein Saugnapf (4) den Stirndeckel in dessen Randzone (8) erfasst.

4. Vorrichtung (1) in der Nähe einer Rollenverpackungsvorrichtung zum Abheben eines Stirndeckels (2) von einem Stirndeckelstapel (3) mittels eines mit mehreren Saugnäpfen (4) ausgestatteten, an einem Haltearm (5) befestigten Greifers (6), wobei wenigstens einer der Saugnäpfe (4) unabhängig von den restlichen Saugnäpfen abhebbar ist, **dadurch gekennzeichnet, daß** der Greifer (6) als solcher koordiniert schwenk- und kippbar ist (Pfeil 9).

5. Vorrichtung nach Anspruch 4, **dadurch gekennzeichnet, daß** wenigstens einer der Saugnäpfe (4) an einem Hubelement (7) befestigt ist.

6. Vorrichtung nach Anspruch 5, **dadurch gekennzeichnet, daß** das Hubelement (7) ein mechanisches, pneumatisches oder hydraulisches Hubelement ist.

7. Vorrichtung nach einem der Ansprüche 5 bis 6, **dadurch gekennzeichnet, daß** der Saugnapf (4) und das Hubelement (7) eine Einheit in Form eines Saughebers bilden.

8. Vorrichtung nach einem der Ansprüche 4 bis 7, **dadurch gekennzeichnet, daß** wenigstens einer der Saugnäpfe (4) derart angeordnet ist, dass er auf die Randzone (8) des Stirndeckels (2) einwirkt.

## Claims

1. Method for lifting a front cover (2) up from a front-cover stack (3) by means of a gripper (6) which is fastened to a holding arm (5) and is provided with suction cups (4), in which method the gripper (6) is placed onto the uppermost front cover (2) of the front-cover stack (3) and the suction cups (4) are loaded with vacuum, at least one of the suction cups (4) being lifted up independently of the remaining suction cups, **characterized in that** a pivoting/tilting movement (arrow 9) of the gripper (6) is additionally performed, which movement assists the lifting operation, the pivoting/tilting movement (arrow 9) of the gripper (6) already being initiated when the front cover (2) has not yet been completely lifted up from its underlying surface, in particular the front-cover stack (3).

2. Method according to Claim 1, **characterized in that** at least one of the suction cups (4) is lifted up first, as a result of which a part section (8) of the front cover (2) is lifted up from the front-cover stack (3).

3. Method according to Claims 1 and 2, **characterized in that** at least one suction cup (4) grips the front cover in its edge zone (8).

4. Apparatus (1) in the vicinity of a roll packaging apparatus for lifting a front cover (2) up from a front-cover stack (3) by means of a gripper (6) which is equipped with a plurality of suction cups (4) and is fastened to a holding arm (5), it being possible for at least one of the suction cups (4) to be lifted up independently of the remaining suction cups, **characterized in that** the gripper (6) per se can be pivoted and tilted (arrow 9) in a coordinated manner.

5. Apparatus according to Claim 4, **characterized in that** at least one of the suction cups (4) is fastened to a lifting element (7).

6. Apparatus according to Claim 5, **characterized in that** the lifting element (7) is a mechanical, pneumatic or hydraulic lifting element.

7. Apparatus according to either of Claims 5 and 6, **characterized in that** the suction cup (4) and the lifting element (7) form one unit in the form of a suction lifting means.

8. Apparatus according to one of Claims 4 to 7, **characterized in that** at least one of the suction cups (4) is arranged in such a way that it acts on the edge zone (8) of the front cover (2).

## Revendications

1. Procédé de décollage d'un couvercle frontal (2) d'une pile de couvercles frontaux (3) au moyen d'un dispositif de préhension (6) fixé sur un bras de fixation (5) et pourvu de ventouses (4), dans lequel procédé le dispositif de préhension (6) est placé sur le couvercle frontal supérieur (2) de la pile de couvercles frontaux (3) et les ventouses (4) sont sollicitées avec une dépression, au moins l'une des ventouses (4) étant décollée indépendamment des autres ventouses, **caractérisé en ce que** le dispositif de préhension (6) effectue en outre un mouvement de pivotement/basculement (flèche 9), qui facilite l'opération de décollage, le mouvement de pivotement/basculement (flèche 9) du dispositif de préhension (6) étant déjà amorcé lorsque le couvercle frontal (2) n'a pas encore été complètement décollé de son subjectile, en particulier de la pile de couvercles frontaux (3).

2. Procédé selon la revendication 1, **caractérisé en ce qu'**au moins l'une des ventouses (4) est soulevée en premier, de sorte qu'une portion partielle (8) du couvercle frontal (2) soit décollée de la pile de couvercles frontaux (3).

3. Procédé selon les revendications 1 et 2, **caractérisé en ce qu'**au moins une ventouse (4) saisit le couvercle frontal dans sa zone de bord (8).

4. Dispositif (1) à proximité d'un dispositif d'emballage de rouleaux pour décoller un couvercle frontal (2) d'une pile de couvercles frontaux (3) au moyen d'un dispositif de préhension (6) muni de plusieurs ventouses (4), fixé à un bras de fixation (5), au moins l'une des ventouses (4) pouvant être décollée indépendamment des autres ventouses, **caractérisé en ce que** le dispositif de préhension (6) peut être pivoté et basculé en tant que tel de manière coordonnée (flèche 9).

5. Dispositif selon la revendication 4, **caractérisé en ce qu'**au moins l'une des ventouses (4) est fixée sur un élément de levage (7).

6. Dispositif selon la revendication 5, **caractérisé en ce que** l'élément de levage (7) est un élément de levage mécanique, pneumatique ou hydraulique.

7. Dispositif selon l'une quelconque des revendications 5 ou 6, **caractérisé en ce que** la ventouse (4) et l'élément de levage (7) forment une unité sous forme de dispositif de levage aspirant.

8. Dispositif selon l'une quelconque des revendications 4 à 7, **caractérisé en ce qu'**au moins l'une des ventouses (4) est disposée de telle sorte qu'elle agisse sur la zone de bord (8) du couvercle frontal (2).
